Europäisches Patentamt

European Patent Office

Office européen des brevets

(19)

(11) Publication number: **0 010 853**
**B1**

(12) **EUROPEAN PATENT SPECIFICATION**

(45) Date of publication of patent specification: **16.02.83**

(51) Int. Cl.³: **B 32 B 27/28, F 16 L 58/10**

(21) Application number: **79301976.1**

(22) Date of filing: **24.09.79**

(54) **Bodies having corrosion-resistant multi-layer coatings.**

(30) Priority: **03.11.78 US 957084**

(43) Date of publication of application:
**14.05.80 Bulletin 80/10**

(45) Publication of the grant of the patent:
**16.02.83 Bulletin 83/7**

(84) Designated Contracting States:
**AT BE CH DE FR GB IT LU NL SE**

(56) References cited:
**DE - A - 2 754 839**
**FR - A - 2 143 955**
**FR - A - 2 223 184**
**US - A - 3 381 718**
**US - A - 3 526 532**

(73) Proprietor: **GENERAL SIGNAL CORPORATION**
**High Ridge Park**
**Stamford Connecticut 06904 (US)**

(72) Inventor: **Slama, William R.**
**28760 Jenkins Road**
**North Olmsted, Ohio 44070 (US)**
Inventor: **Washburn, Robert B.**
**16610 Sedalia Avenue**
**Cleveland, Ohio 44135 (US)**
Inventor: **Semanisin, Dale J.**
**10301 Loretta Avenue**
**Cleveland, Ohio 44111 (US)**

(74) Representative: **Milhench, Howard Leslie et al,**
**A.A. Thornton & Co. Northumberland House**
**303/306 High Holborn**
**London, WC1V 7LE (GB)**

Courier Press, Leamington Spa, England.

## Bodies having corrosion-resistant multi-layer coatings

The present invention is concerned with bodies having corrosion-resistant multi-layer coatings, such as internally coated chimney liners, flue ducts and scrubbers.

Chimneys in, for example, power plants and smelters are required to be resistant to corrosion, particularly acid corrosion when sulphur-containing fuels are used. This is particularly important when, in order to increase the thermal efficiency, the flue gas temperature is lowered (closer to the dew points of the various acids in the exhaust gases). Installations having sulphur dioxide scrubbers produce flue gases which are not only cooler, but also wetter, with consequent formation of a corrosive mist in contact with the chimney liners.

Various corrosion-resistant coatings have been proposed for this purpose, two specific proposals being the use of a polyester or vinyl ester polymer containing a reinforcing filler and the use of fluorinated polymer. In particular, U.S. Patent 3526532 discloses a corrosion-resistant multi-layer coating for metals, which comprises a pigmented primer layer having thereon a topcoat comprising a hydrofluorocarbon polymer. (It is, of course, known to provide intermediate layers between primer and topcoat layers). Examples of suitable hydrofluorocarbon polymers quoted in the U.S. patent are polyvinyl fluoride, polyvinylidene fluoride, vinyl fluoride/vinylidene fluoride copolymers, and copolymers of vinyl fluoride or vinylidene fluoride with at least one other halogen substituted ethylenically unsaturated monomer.

British Specification 1364338 (which is equivalent to German Specification 2132645 and French Specification 2143955) and U.S. Patent 3920793 (which is equivalent to French Specification 2223184) disclose generally similar multi-layer coatings for metals, the multilayer coatings again comprising a pigmented primer layer having thereon a coating comprising a fluorinated polymer. The fluorinated polymer disclosed in the above-mentioned British specification is polyvinylidene fluoride, while the fluorinated polymers disclosed in the abovementioned U.S. Patent 3920793 are polytetrafluoroethylene, tetrafluoroethylene/hexafluoroethylene copolymers, polyvinylidene fluoride, polyvinyl fluoride, chlorotrifluoroethylene polymers, ethylene chlorotetrafluoroethylene (sic) polymers, copolymers of tetrafluoroethylene and fluorinated ethylene (sic) and copolymers of tetrafluoroethylene and perfluoropropyl vinyl ether.

Similar multi-layer coatings comprising a primer layer and a layer comprising a fluorinated polymer are disclosed in, for example, Belgian Patent 763759, U.S. Patent 3874903 and German Offenlegungschrift 2754839; the fluorinated polymers disclosed are similar to those previously mentioned.

Specifically, none of the above-mentioned documents disclose the use of a fluoroelastomer as the coating present on the primer. Fluoroelastomers are known to be permeable to sulphuric acid and for this reason their use as corrosion-resistant layers would be contraindicated.

We have now found, surprisingly, that fluoroelastomers can help to provide resistance to corrosion by sulphuric acid in a particular multi-layer coating arrangement.

According to the invention, therefore, there is provided a body having a corrosion-resistant multilayer coating thereon, the multi-layer coating comprising, in the order specified, a primer layer of a first thermosetting polymer, at least one intermediate layer comprising a second thermosetting polymer, which may be the same as the first thermosetting polymer or different thereto, together with a reinforcing filler, and an outer layer comprising a fluoroelastomer.

The multi-layer coatings used according to the invention are resistant to chemical attack by strong acids, resistant to transport by water or chemicals, thermally resistant and mechanically resistant (including abrasion resistant). The body having the multi-layer coating may be, for example, a concrete, brick or steel body, for example, in a chimney liner or flue duct.

Examples of fluoroelastomers for use according to the invention are vinylidene fluoridehexafluoropropylene polymers, for example, the polymers available from E. I. DuPont de Nemours & Co., Inc. under the trade mark Viton A-35 or B-50, or a polymer available from 3M Company under the trade mark Fluorel (for example, Fluorel 2175). Fluorel is the trade mark used for a series of fully saturated polymers containing more than 60% fluorine by weight.

The fluoroelastomer preferably has a molecular weight of less than $2 \times 10^5$ (if the molecular weight is too high, the polymer is difficult to apply as a coating in view of its insolubility).

The substrate to which the multi-layer coating is applied to from the coated body according to the invention is generally first cleaned and roughened before application of the primer layer by, for example, acid etching or sand blasting. The primer layer is then applied to the substrate before any substantial oxidation can occur, thus ensuring strong adhesive bonding.

The primer layer is of a thermosetting polymer, as mentioned above. Preferably the thermosetting polymer is an unsaturated thermosetting polymer, such as a polyester or a vinyl ester polymer. The primer layer preferably has a dry thickness of about 1 to about 5 mils (25 to 127 microns).

One or more intermediate layers comprising thermosetting polymer and a reinforcing filler are applied to the primer layer; the or each intermediate layer preferably has a dry thickness of about 20 to about 80 mils (508 to 2030 microns). The chemical properties of the thermosetting polymers employed in the primer layer and in the intermediate layer or layers are such that bonding occurs between the primer layer and the substrate and between the primer layer and the adjacent intermediate layer as well as between contiguous intermediate layers if more than one such layer is present.

The or each intermediate layer contains a thermosetting polymer, as mentioned above. The thermosetting polymer present in the or each intermediate layer may be, for example, a vinyl ester polymer, a polyester or an epoxy, furan, phenolic or urethane resin. A vinyl ester resin is preferred.

The thermosetting polymer present in the or each intermediate layer is preferably unsaturated and crosslinked by means of an ethylenically unsaturated monomer, such as styrene, an acrylate monomer or a methacrylate monomer.

The reinforcing filler present in the or each intermediate layer may be any suitable corrosion-resistant material, such as glass or mica flakes, carbon, silica, asbestos or glass wool. Glass flakes less than 0.4 mm long in any dimension are preferred; such flakes are available commercially from Owens Corning Fiberglass Corp., Toledo, Ohio.

The or each intermediate layer may be formed for example, as follows: a vinyl ester in an amount in the range from 35% to 55% by weight is mixed with a vinyl monomer, for example, styrene, in an amount from 40% to 25% by weight and a reinforcing filler, e.g., glass flakes, in an amount from 15% to 30%. The composition preferably also contains one or more thixotropic agents, such as fumed asbestos, fumed silica, or clay, in an amount less than 1%; glycerin or a similar polar compound in an amount from 0.04% to 0.08%; one or more pigments, particularly metallic oxides, such as titanium dioxide or lead oxide, in an amount less than 1%; one or more catalysts, such as a peroxide (e.g., methylethyl ketone peroxide), in an amount from 1% to 4%; one or more promoters, such as amines or metallic soaps, in an amount from 0.05% to 0.5%; one or more inhibitors, such as catechols, quinones, and hydroquinones, in an amount from 0.01% to 0.1%; and one or more coupling agents, such as a silane, in an amount less than 1%. A composition containing all these ingredients has a limited "pot" life, and must be applied to the primer layer within a relatively short time, usually within about 30 minutes to about 2 hours.

The intermediate layer may be applied as a solution or dispersion in any conventional manner including rolling, brushing, trowelling, air-atomized spraying, or airless spraying. Typically, a first coat of dry thickness about 10 to 25 mils (254 to 635 microns) is applied to the primer layer and then a second coat, also of thickness 10 to 25 mils (254 to 635 microns), is applied, such that the resulting composite intermediate layer has a thickness of about 20 to 50 mils (508 to 1270 microns). This range of thickness provides the substrate with substantial protection from corrosion. Thus the intermediate layer provides substantial impermeability to sulphuric acid and, in addition, substantial impermeability to water. Thicknesses less than about 15 mils (381 microns) generally do not provide adequate protection and thicknesses which are too great may result in a coating layer which, over time, tends to crack and flake off from the coated surface.

As mentioned above, more than one intermediate layer can be employed; each such layer preferably has a dry thickness of about 20 to about 80 mils (508 to 2030 microns). Each of the intermediate layers may be identical or may vary in the polymer or reinforcing filler present therein.

An outer layer of a fluoroelastomer and a reinforcing filler is applied; the chemical properties of the fluoroelastomer employed are such that, upon curing, a chemical bond forms between the intermediate layer and the fluoroelastomer outer layer.

The outer layer may be prepared as follows. A formulation is prepared which includes a fluoroelastomer, for example, of the specific types referred to above.

The fluoroelastomer may be mixed in an amount from 25% to 60% by weight with a reinforcing filler such as carbon, glass flakes, mica flakes or silica (carbon being preferred). The size of the filler particles should preferably not exceed about 1/64" (0.4 mm) in any dimension. The reinforcing filler is generally present in the formulation in an amount from 10% to 30% by weight. Also desirably included in the formulation are one or more acid acceptors (such as lead oxide) which are capable of reacting with hydrofluoric acid produced during curing of the elastomer, generally in an amount from 3% to 15% by weight. One or more curing agents, such as amines, diamines, peroxides, bisphenols or azo compounds, in an amount less than 10% by weight; one or more pigments, such as oxides of titanium, in an amount less than 10%; and one or more water-reactive compounds, such as calcium oxide or magnesium oxide (to react with water produced during curing of the elastomer) are also desirably included. When the fluoroelastomer is Viton A-35 or B-50 as described above, the preferred curing agent is Diak No. 3 which is also manufactured by DuPont for use with the Viton series of fluoroelastomers.

The fluoroelastomer, reinforcing filler, and other components are mixed, milled, and pulverized. Solvent is then added. Useful solvents include organic acetates, such as n-butyl acetate and amyl acetate, ketones, and esters. When the fluoroelastomer used is Viton A-35, a solvent mixture of n-butyl acetate and amyl acetate in the ratio of about 4 parts n-butyl acetate per part amyl acetate is particularly useful. The outer layer composition so prepared may then be applied as a solution or dispersion to the intermediate layer, typically in a dry thickness of about 10 to about 50 mils (254 to 1270 microns), using conventional techniques such as those described for applying the intermediate layer.

After a period of time, typically one day to one week, wherein the solvent is released, the entire composite coating may be heat cured at a temperature from about 250° to about 500°F (121 to 260°C) preferably 250° to 300°F (121 to 149°C) generally for at least about 3 hours preferably for at least about 8 hours. The resulting outer fluoroelastomer layer is permeable to sulphuric acid, but protects the inner coating layer from the corrosive effects of concentrated sulphuric acid. The outer layer also provides abrasion resistance.

In order that the present invention may be more fully understood, the following Examples and Comparative Examples are given by way of illustration only.

Comparative Example 1

A steel panel was sandblasted and then a coating of fluoroelastomer was applied over the surface to produce a coating layer having a dry thickness of 30 mils (762 microns). The chemical resistance of the protective coating layer was then evaluated by the Atlas Test Cell Evaluation (ASTM Test C 868). The coated steel panels were placed in contact with a vapour containing distilled water at 180°F (82°C).

After two weeks the steel panels were removed from contact with the vapour and examined. The coating layer was blistered and could be readily peeled off the steel panel. The steel panel itself showed visible indications of oxidation.

Example 1

Comparative Example 1 was repeated, except that the sandblasted steel panel was coated successively with a polyester primer layer, a glass flake-filled vinyl ester polymer layer and a carbon-filled fluoroelastomer.

The coated panel was evaluated as in Comparative Example 1; during several months, the panels were periodically removed from contact with the vapour and examined. No evidence of blistering or peeling of the coating was noted, nor was there any indication of corrosion of the steel panel surfaces.

Example 2

Steel panels which had been covered with a multi-layer coating as in Example 1 were installed as part of the chimney lining at a power plant burning fossil fuels. The panels were periodically examined over four months. After four months, no evidence of any blistering or other deterioration of the coating layer was evident. There was no indication of any corrosion of the steel panels.

Comparative Example 2

Steel panels covered with a coating layer of glass flake-filled vinyl ester were also installed at the same power plant as in Example 2 and periodically examined. After four months, major blistering of the coating was observed and large patches of coating material could be readily removed from the steel panels. There was significant corrosion of the underlying panels.

**Claims**

1. A body having a corrosion resistant multi-layer coating thereon, the multi-layer coating comprising in the order specified, a primer layer of a first thermosetting polymer, at least one intermediate layer comprising a second thermosetting polymer, which may be the same as the first thermosetting polymer or different thereto, and a reinforcing filler, and an outer layer comprising a fluorinated polymer and a reinforcing filler, characterised in that the fluorinated polymer is a fluoroelastomer.

2. A coated body according to claim 1 characterised in that the primer layer is about 1 to 5 mils (25 to 127 microns) thick.

3. A coated body according to claim 1 or 2, characterised in that the first thermosetting polymer is a polyester or a vinyl ester polymer.

4. A coated body according to any of claims 1 to 3, characterised in that the second thermosetting polymer is a polyester, a vinyl ester polymer or an epoxy, furan, phenolic or urethane resin.

5. A coated body according to any of claims 1 to 4, characterised in that the reinforcing filler in the intermediate layer is carbon, silica, glass wool, glass flakes or mica flakes.

6. A coated body according to any of claims 1 to 5, characterised in that the or each intermediate layer is about 20 to about 80 mils (508 to 2030 microns) thick.

7. A coated body according to any of claims 1 to 6, characterised in that the reinforcing filler in the outer layer is carbon, silica, glass wool, glass flakes or mica flakes.

8. A coated body according to any of claims 1 to 7, characterised in that the outer layer is about 10 to 50 mils (254 to 1270 microns) thick.

**Patentansprüche**

1. Körper mit einem korrosionsbeständigen mehrschichtigen Überzug, welcher mehrschichtige Überzug eine Grundierungsschicht aus einem ersten hitzehärtbaren Polymer, mindestens eine Zwischenschicht, die ein zweites hitzehärtbares Polymer, welches das gleiche Polymer wie das erste hitzehärtbare Polymer oder davon verschieden sein kann, und einen verstärkenden Füllstoff umfaßt, und eine Außenschicht, die ein fluoriertes Polymer und einen verstärkenden Füllstoff umfaßt, in der angegebenen Reihenfolge aufweist, dadurch gekennzeichnet, daß des fluorierte Polymer ein Fluorelastomer ist.

2. Beschichteter Körper nach Anspruch 1, dadurch gekennzeichnet, daß die Grundierungsschicht etwa 1 bis 5 Mil (25 bis 127 Mikron) dick ist.

3. Beschichteter Körper nach Anspruch 1 oder 2, dadurch gekennzeichnet, daß das erste hitzehärtbare Polymer ein Polyester oder ein Vinylesterpolymer ist.

4. Beschichteter Körper nach einem der Ansprüche 1 bis 3, dadurch gekennzeichnet, daß das zweite hitzehärtbare Polymer ein Polyester, ein Vinylesterpolymer oder ein Epoxydharz, ein Furanharz, ein Phenolharz oder ein Urethanharz ist.

5. Beschichteter Körper nach einem der Ansprüche 1 bis 4, dadurch gekennzeichnet, daß Kohlenstoff, Siliciumdioxid, Glaswolle, Glasflocken oder Glimmerflocken als verstärkender Füllstoff in der Zwischenschicht enthalten sind.

6. Beschichteter Körper nach einem der Ansprüche 1 bis 5, dadurch gekennzeichnet, daß die oder sämtliche Zwischenschichten etwa 20 bis 80 Mil (508 bis 2030 Mikron) dick sind.

7. Beschichteter Körper nach einem der Ansprüche 1 bis 6, dadurch gekennzeichnet, daß Kohlenstoff, Siliciumdioxid, Glaswolle, Glasflocken oder Glimmerflocken als verstärkender Füllstoff in der Außenschicht enthalten sind.

8. Beschichter Körper nach einem der Ansprüche 1 bis 7, dadurch gekennzeichnet, daß die Außenschicht etwa 10 bis 50 Mil (254 bis 1270 Mikron) dick ist.

## Revendications

1. Corps comportant sur lui un revêtement à couches multiples résistant à la corrosion, ce revêtement comprenant dans l'ordre spécifié, une couche primaire d'un premier polymère thermodurcissable, au moins une couche intermédiaire comprenant un second polymère thermodurcissable, qui peut être le même que le premier ou être différent de celui-ci, et une charge de renfort, et une couche extérieure comprenant un polymère fluoré et une charge de renfort, caractérisé en ce que le polymère fluoré est un fluoro-élastomère.

2. Corps revêtu suivant la revendication 1, caractérisé en ce que la couche primaire a une épaisseur d'environ 1 à 5 millièmes de pouces (0,0254 à 0,127 mm).

3. Corps suivant la revendication 1 ou 2, caractérisé en ce que le premier polymère thermodurcissable est un polyester ou un polymère d'ester vinylique.

4. Corps revêtu suivant l'une quelconque des revendications 1 à 3, caractérisé en ce que le second polymère thermodurcissable est un polyester, un polymère d'ester vinylique ou une résine époxy, furane, phénolique ou uréthane.

5. Corps revêtu suivant l'une quelconque des revendications 1 à 4, caractérisé en ce que la charge de renfort dans la couche intermédiaire est constituée par du carbone, de la silice, de la laine de verre, des paillettes de verre ou des paillettes de mica.

6. Corps suivant l'une quelconque des revendications 1 à 5, caractérisé en ce que la couche intermédiaire, ou chacune de celles-ci, a une épaisseur d'environ 20 à 80 millièmes de pouces (0,508 à 2,032 mm).

7. Corps revêtu suivant l'une quelconque des revendications 1 à 6, caractérisé en ce que la charge de renfort dans la couche extérieure est constituée par du carbone, de la silice, de la laine de verre, des paillettes de verre ou des paillettes de mica.

8. Corps revêtu suivant l'une quelconque des revendications 1 à 7, caractérisé en ce que la couche extérieure a une épaisseur d'environ 10 à 50 millièmes de pouces (0,254 à 1,27 mm).